# EUROPÄISCHE PATENTSCHRIFT

(11) **EP 2 019 465 B1**
(45) Veröffentlichungstag und Bekanntmachung des Hinweises auf die Patenterteilung: **03.04.2013**
(21) Anmeldenummer: 08013209.5
(22) Anmeldetag: 22.07.2008
(51) Int. Cl.: H02B 1/056, H02B 1/14, H02B 1/21, H01H 9/02

(54) **Kompakter Niederspannungs-Sicherheitstrennschalter mit Schienenabschirmung**
Compact low-voltage safety breaker
Commutateur de séparation de sécurité basse tension compact doté d'un écran de rails

(30) Priorität: 27.07.2007 PL 38302507
(43) Veröffentlichungstag der Anmeldung: 28.01.2009
(73) Patentinhaber: APATOR S.A., 87-100 Torun (PL)
(72) Erfinder: Gliszczynski, Miroslaw, PL-87-100 Torun (PL); Melkowski, Lukasz, PL-86-330 Melno (PL); Lankiewicz, Sebastian, 62-652 Chodow (PL)
(74) Vertreter: Hoffmeister, Helmut

(56) Entgegenhaltungen:
- EP-A- 0 642 197
- DE-A1- 3 536 213
- DE-A1- 19 628 793
- DE-U1-202005 015 033
- FR-A- 2 575 868

## Beschreibung

Die Erfindung betrifft einen kompakten Niederspannungs-Sicherheitstrennschalter zur Montage auf einem Sammelschienensystem, aufweisend
- einen auf ein jeweiliges Sammelschienensystem aufzusetzenden Adapter,
- ein Mittelteil, das von dem Adapter unterlegt ist,
- einen am Mittelteil schwenkbar angeordneten Schaltdeckel,
- und eine Schienenabschirmung.

Es sind kompakte Sicherheitstrennschalter bekannt, bei denen die Schienenabschirmung fest mit dem Sicherheitstrennschalter verbunden ist. Ein typischer Vertreter der Sicherheitstrennschalter der eingangs genannten Art ist das Produkt der Reihe "Modeion" der Firma OEZ, Letohrad, Tschechische Republik. Hier sind die Sammelschienen im Bereich der Anschlussklemmen des Sicherheitstrennschalters abgeschirmt; allerdings ist der Zugang zu den Sammelschienen nicht möglich. Die kompakten Sicherheitstrennschalter mit fester Schienenabschirmung sind nur für Schienenbrücken bzw. Sammelschienen von bestimmter Breite geeignet. Dies begrenzt die Verwendungsmöglichkeiten der Sicherheitstrennschalter von bestimmten Ausmaßen und ihre Anpassung an unterschiedliche Schienenbreiten.

Es sind weiterhin Trennschalter bekannt, bei denen eine Abschirmung der Hakenklemme ein integraler Bestandteil des Adapters ist. Bei solchen Apparaten gibt es keine Möglichkeit, den Sammelschienenabstand zu ändern.

DE 20 2005 015033 U1, die als nächstliegender Stand der Technik angesehen wird, offenbart einen Niederspannungs-Sicherheitstrennschalter gemäß dem Oberbegriff des Anspruchs 1.

Aufgabe der Erfindung ist, einen kompakten Niederspannungs-Sicherheitstrennschalter zur Montage auf Sammelschienensystemen anzugeben, dessen Schienenabschirmung sich für unterschiedliche Sammelschienenbreiten und - abstände eignet.

Diese Aufgabe wird durch einen gattungsgemäßen, kompakten Niederspannungs-Sicherheitstrennschalter, im Weiteren Sicherheitstrennschalter genannt, gelöst, bei dem die Schienenabschirmung durch Verschieben verstellbar am Adapter oder am Mittelteil angeordnet ist.

Die Schienenabschirmung kann in oder auf den Adapter ein- oder aufschiebbar bzw. in oder auf das Mittelteil ein- oder aufschiebbar sein. Vorzugsweise wird eine Anordnung der beweglichen Schienenabschirmung am Adapter gewählt, da letzterer direkt mit den Sammelschienen in Kontakt steht.

Vorzugsweise weist die Schienenabschirmung zwei zueinan-der gewinkelt senkrecht zueinander liegende, plattenförmige Abdeckelemente auf, die einen vorderen Bereich des Adapters und - nach Bedarf - ein Teil der Sammelschiene abdecken können, falls die Sammelschiene über den Adapter hinausragt.

Die Beweglichkeit und Einschiebbarkeit der Schienenabschirmung können beispielsweise zwei seitliche, in den Adapter einsteckbare Führungsarme gewährleisten. Die Führungsarme können platten- oder leistenförmig sein oder aus L-; U-oder anderen Profilen bestehen. Die Führungsarme können gleich oder unterschiedlich lang ausgeführt sein.

Vorzugsweise sind die Führungsarme in seitliche Führungskanäle des Adapters einrastbar und stufenweise schiebbar. Dementsprechend können die Führungsarme jeweils mit wenigstens einem ersten Rastelement versehen sein, das mit wenigstens einem, im Führungskanal angeordneten zweiten Rastelement zusammenwirkt.

Die Rastelemente des Führungsarmes können in Form von mehreren hintereinander zahnleistenartig aufgereihten, teilzylindrischen Eintiefungen bzw. Mulden ausgeführt sein, in die das entsprechend geformte Rastelement des Adapters eingreifen kann. Diese Anordnung ermöglicht eine Einstellung der Lage der Führungsarme, deren Genauigkeit lediglich durch die Größe des einzelnen Rastelementes bedingt ist.

Für die Lagestabilisierung der Schienenabschirmung kann eine innerhalb des Führungskanals befindliche Halterung sorgen. Die Halterung kann beispielsweise aus prismatischen Blockierelementen bestehen, die den eingeschobenen Führungsarm von oben und von unten umgreifen. Dabei soll darauf geachtet werden, dass die Blockierelemente eine ungestörte, gleitende Bewegung des Führungsarms ermöglichen können.

Ein Herausfallen der Schienenabschirmung aus dem Adapter können entsprechende Blockier- oder Rastelemente verhindern, die beim Zurückschieben mit ihrer Stützfläche gegen ein im Führungskanal befindliches anderes Blockierelement drücken.

Von großem Vorteil ist, dass die bewegliche und einstellbare Schienenabschirmung für unterschiedliche Schienenbreiten und -abstände verwendet werden kann, ohne auf einen anderen, gegebenenfalls größeren Adapter greifen zu müssen. Die Schienenabschirmung gemäß Erfindung kann die den Sicherheitstrennschalter bedienende Person wirkungsvoll vor Verbrennungen oder vor elektrischen Stromschlägen schützen.

Abhängig von der Breite der Sammelschienen und vom Abstand der Schienenbrücke lässt es sich einstellen, wie weit die Schienenabschirmung aus dem Adapter herausgezogen werden soll.

Die Erfindung ist in einem Ausführungsbeispiel anhand der beiliegenden Zeichnung veranschaulicht, deren Figuren zeigen:
- Fig. 1: einen Sicherheitstrennschalter in einer perspektivischen Ansicht;
- Fig. 2: einen Rippenkasten des Adapters, in einer perspektivischen Ansicht von oben,
- Fig. 3: ein vergrößertes Detail "C" gemäß Fig. 2;
- Fig. 4: den Rippenkasten in einer Teilansicht von unten;
- Fig. 5: ein vergrößertes Detail "D" gemäß Fig. 4;
- Fig. 6: die Schienenabschirmung in einer perspek- tivischen Ansicht von oben;
- Fig. 7: die Schienenabschirmung gemäß Fig. 6 in einer Ansicht von unten;
- Fig. 8: ein vergrößertes Detail "B" gemäß Fig. 6;
- Fig. 9: den Rippenkasten gemäß Fig. 2, mit teil- weise eingeschobener Schienenabschirmung, in einer Draufsicht auf seine Oberseite;
- Fig. 10: den Rippenkasten gemäß Fig. 9 in einer schematischen Seitenansicht;
- Fig. 11: einen Schnitt A-A gemäß Fig. 9; und
- Fig. 12: einen Schnitt B-B gemäß Fig. 9.

Der kompakte Niederspannungs-Sicherheitstrennschalter 100, im Weiteren Sicherheitstrennschalter genannt, besteht aus einem kastenförmigen Mittelteil B, einem Adapter C und einem an dem Mittelteil B schwenkbar befestigten, Schaltdeckel A. Die Teile A, B und C sind in einer im Wesentlichen kompletten, arbeitsfähigen Version dargestellt.

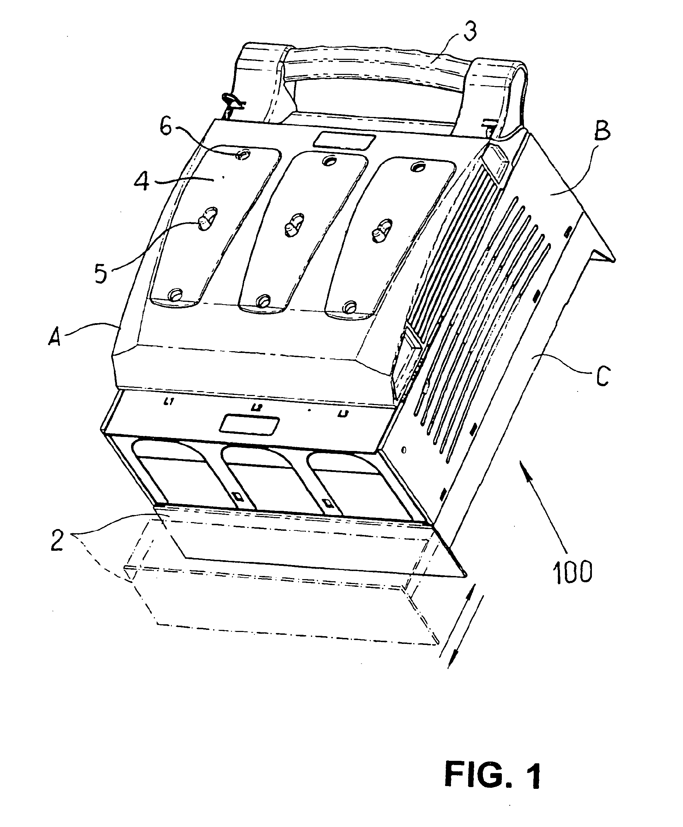

Das Mittelteil B ist in Fig. 1 nur von außen erkennbar. Es beinhaltet erforderliche Teile, wie komplette Kontaktklammern mit ihren Sitzen, Isolationstrennwände, entsprechende Montageöffnungen und - hülsen, Kabelklemmen, Schrauben etc. Da der innere Aufbau des Mittelteils B für die Erfindung irrelevant ist, wird auf seine Beschreibung verzichtet.

Der Schaltdeckel A weist einen Handgriff 3 zum Heben des Deckels um eine nicht dargestellte Drehachse auf. Ferner weist der komplette Schaltdeckel A drei nebeneinander liegende, etwa trapezförmige, transparente Scheiben 4 mit mittleren Schiebern 5 und entsprechenden Prüföffnungen 6 für Prüfwerkzeuge auf. Beim aufgesetzten, verschlossenen Schaltdeckel besteht eine elektrische Verbindung zwischen Eingangs-und Abgangsanschlüssen. Hierfür sind nicht dargestellte, unterhalb der Scheiben 4 befindliche Sicherungseinsätze mit Kontaktmessern vorgesehen.

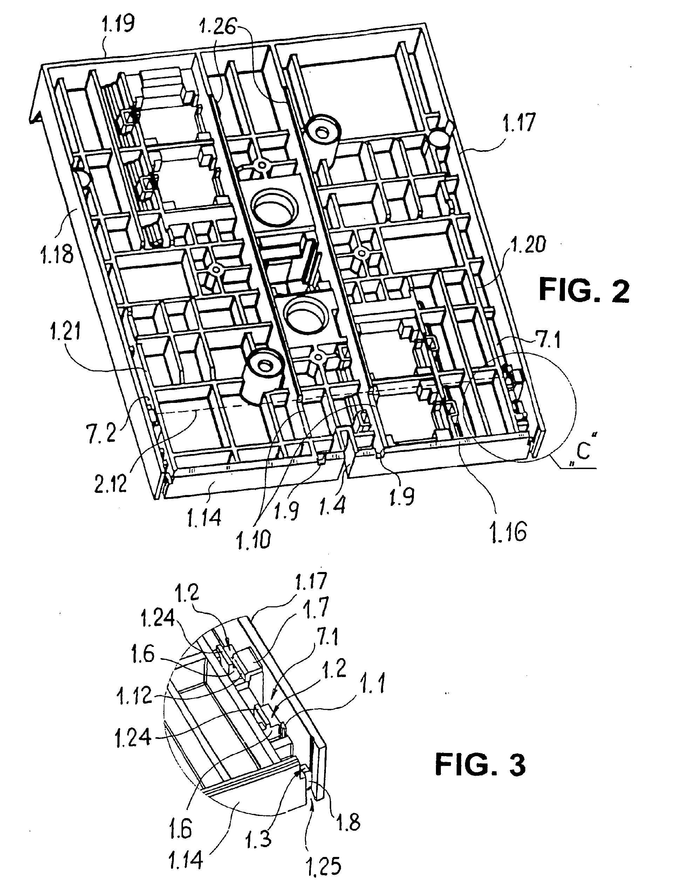

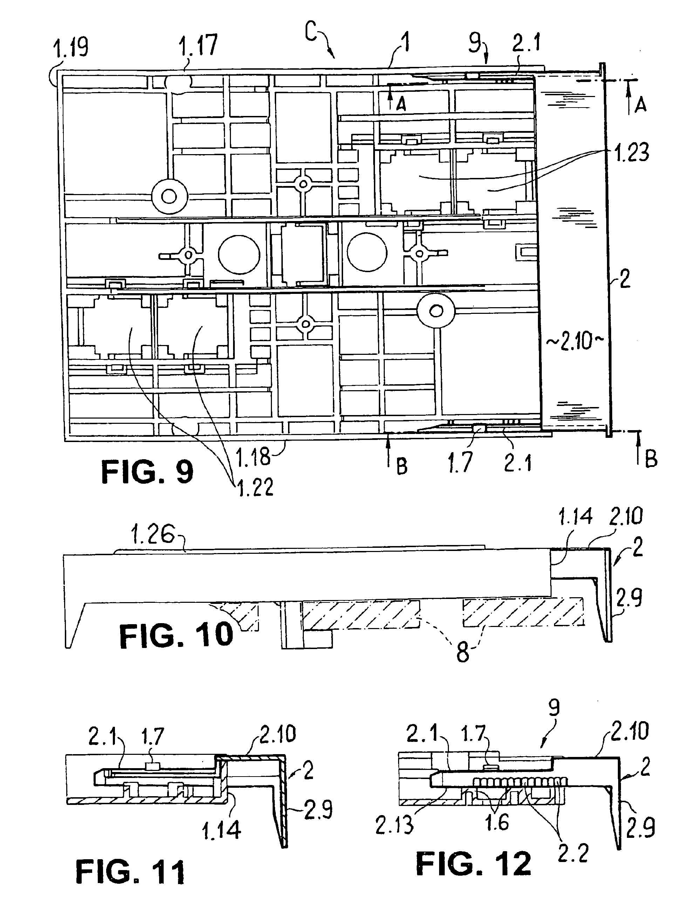

Der komplette Adapter C umfasst einen in den Figuren 2 und 9 sowie in der Detaildarstellung gem. dargestellten, flächenhaften Rippenkasten 1, dessen Außenkonturen an die Außenkonturen des Mittelteils B angepasst sind (vgl. Fig. 1). Der Rippenkasten 1 ist durch zwei Seitenwände 1.17; 1.18, eine Stirnwand 1.14 sowie eine hintere Wand 1.19 begrenzt. Innerhalb des Rippenkastens 1 verlaufen parallel und in einem geringen Abstand zu den Seitenwänden 1.17, 1.18 zwei Innenwände 1.20, 1.21, die jeweils einen von zwei im vorderen Teil des Rippenkastens wandseitig verlaufenden Führungskanälen 7.1, 7.2 bilden.

Die Stirnwand 1.14 reicht nicht bis zu den Seitenwänden 1.17, 1.18, sondern belässt jeweils eine Eingangslücke 1.25 zum Führungskanal 7.1, 7.2. (vgl. Fig. 3). Mitten durch den Rippenkasten 1 verlaufen zwei parallel zueinander liegende Isolationswände 1.26, die etwas über den restlichen Rippenkasten 1 nach oben ragen (vgl. auch Fig. 10), um die Isolationsabstände zwischen den nicht dargestellten Strombahnen zu gewährleisten. Ferner erkennt man in Fig. 9 zwei Paare von entfernbaren Plättchen 1.22, 1.23 mit umlaufenden Sollbruchstellen. Nach Entfernen dieses Plättchen 1.22 oder 1.23 entstehen Öffnungen zur Unterbringung von nicht dargestellten Hakenklemmen. Sonst beinhaltet der Adapter C bekannte Teile, wie Isolationstrennwände, Versteifungsrippen, Montagehülsen etc.

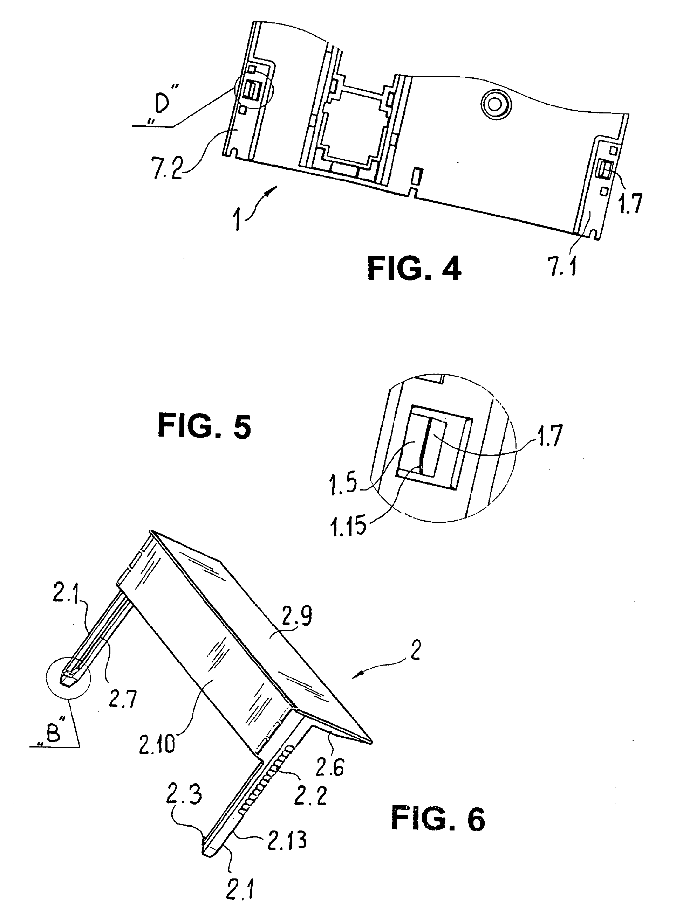

In den Figuren 6, 7 und 9 ist weiterhin eine gegenüber dem Adapter C einschiebbar angeordnete, vor den Stromstößen schützende Schienenabschirmung 2 zu erkennen. Diese weist zwei senkrecht zueinander gewinkelte, plattenförmige Abdeckelemente 2.9, 2.10 sowie zwei seitlich angeordnete, leistenförmige Führungsarme 2.1 auf, die zum Einschieben in die vorgenannten Führungskanäle 7.1, 7.2 bestimmt sind. Wie es die Figuren 6, 7 und 9 zeigen, sind die Führungsarme 2.1 gleich lang und zueinander spiegelsymmetrisch angeordnet. Eine Halterung 9 der Führungsarme 2.1 in den Führungskanälen wird noch beschrieben werden.

Die Worte: "oben", "unten" beziehen sich auf die Fig. 1, bei der der Schaldeckel A ein oberes und der Adapter C ein unteres Teil des Sicherheitstrennschalters 100 bilden.

Das obere Abdeckelement 2.10 der Schienenabschirmung 2 ist mit einer mittig angeordneten Versteifungsrippe 2.5 versehen. Das andere, parallel zur Stirnwand 1.14 verlaufende Abdeckelement 2.9 weist zwei mittlere Versteifungsrippen 2.8 sowie zwei seitliche Versteifungsrippen 2.6 auf. In einem gänzlich in den Adapter C eingeschobenen Zustand, der der in Fig. 1 dargestellten Konfiguration entspricht, reicht das obere Abdeckelement 2.10 bis zu einer mit Strichlinie 2.12 (vgl. Fig. 2) bezeichneten Position. In dieser Position rücken beide Versteifungsrippen 2.8; 2.6 des Abdeckelementes 2.9 und die mittige Versteifungsrippe 2.5 des oberen Abdeckelementes 2.10 in zwei an der Stirnwand 1.14 eingebrachte Aussparungen 1.9 und entsprechend in einen mittigen Sitz 1.4 und in die Eingangslücken 1.25 ein. Eine an der Stirnwand 1.14 nach außen abgeschrägte Längskante 1.16 erleichtert das Einschieben der Schienenabschirmung 2 in den Adapter C.

Die Figuren 1, 9 und 10 zeigen die Schienenabschirmung 2, die nur teilweise in den Adapter C eingeschoben ist. Dieser Zustand entspricht einer in Fig. 10 schematisch angedeuteten Anordnung der Sammelschienen 8 von einem Querschnitt 10 x 60 mm. Man erkennt, dass die erste, auf der rechten Seite der Figur befindliche Sammelschiene 8 wesentlich über die Stirnwand 1.14 des Adapters hinausragt. Trotzdem besteht kaum Gefahr eines Stromschlages oder einer Verbrennung für den Elektromonteur bzw. für den Benutzer, da die nicht leitende Schienenabschirmung 2 einen ausreichenden Schutz vor zufälliger Berührung bietet. Abhängig von der Breite der Sammelschienen und vom Abstand der Schienenbrücke lässt es sich einstellen, wie weit die Schienenabschirmung aus dem Adapter herausgezogen werden soll.

In vorderem Teil des Rippenkastens 1 ist eine Absenkung 1.10 (vgl. Fig. 2) der Isolationswände 1.26 gegenüber den Seitenwänden 1.17, 1.18 sichtbar. Diese Absenkung und das tiefe Niveau der übrigen Wände ermöglichen einen bündigen Abschluss des Abdeckelementes 2.10 der Schienenabschirmung 2 an dem Rippenkasten 1.

Die eingeschobene Schienenabschirmung 2 sollte kein Spiel haben und darf sich aus der Halterung 9 in den Führungskanälen 7.1, 7.2 nicht selbständig lösen, insbesondere nicht ohne weiteres herausziehbar sein. Die Einzelheiten der die Lage der Führungsarme 2.1 stabilisierenden Halterung 9 sind insbesondere den Figuren 3, 9, 11 und 12 zu entnehmen. Die Halterung 9 ist durch nachfolgend beschriebene Blockierelemente gebildet.

So zeigt die Fig. 3 zwei prismatische, innerhalb des Führungskanals 7.1 angeordnete Blockierelemente 1.6, die jeweils eine nach oben ragende Führungsrippe 1.24 zur seitlichen Abstützung des Führungsarms 2.1 aufweisen. In der Eingangslücke 1.25 befindet sich ein weiteres prismatisches Blockierelement 1.8.

Wie den Figuren 3 und 12 zu entnehmen ist, bilden die drei Blockierelemente 1.6, 1.8 jeweils eine Auflagefläche 1.2; 1.3, an der sich eine untere Längskante 2.13 (vgl. Figuren 6 und 12) des eingeschobenen Führungsarms 2.1 abstützt. Von oben ist der Führungsarm 2.1 durch ein Gegenelement, d. h., ein Blockierelement 1.7 gegen Herausfallen aus dem Führungskanal 7.1, 7.2 gesichert (vgl. Figuren 11 und 12). Ferner weist das obere Blockierelement 1.7 einen in Fig. 3 gezeigten, abgeschrägten Schenkel 1.12 auf.

Das Blockierelement 1.7 ist auch in Figuren 4 und 5 "von unten" zu sehen. Es weist eine nach unten gerichtete Auflagefläche 1.5 und eine an seinem Schenkel 1.12 angeordnete, die Einführung des Führungsarms 2.1 erleichternde Abschrägung 1.15 auf.

Die Auflageflächen 1.2; 1.3, Führungsrippen 1.24 und das obere Blockierelement 1.7 mit seinem nach unten gerichteten Schenkel 1.12 ermöglichen eine gleitende Bewegung des eingeschobenen Führungsarms 2.1 innerhalb des Führungskanals 7.1, 7.2.

Vor zufälligem Herausschieben der Schienenabschirmung 2 aus dem Adapter C schützt ein an einem freien Ende 2.11 des Führungsarms 2.1 angeordnetes Rastelement 2.3, das beim Zurückschieben mit seiner senkrecht gegenüber dem Führungsarm 2.1 liegenden Stützfläche 2.14 gegen den Schenkel 1.12 des oberen Blockierelementes 1.7 drückt.

Das Herausnehmen der Schienenabschirmung 2 aus den Führungskanälen 7.1, 7.2 ist also praktisch ausgeschlossen. Dies wurde gewollt konzipiert, um die Manipulationen mit der Schienenabschirmung zu verhindern. Eine Demontage der Schienenabschirmung 2 ist nur beim Zerlegen des Sicherheitstrennschalters 100 möglich.

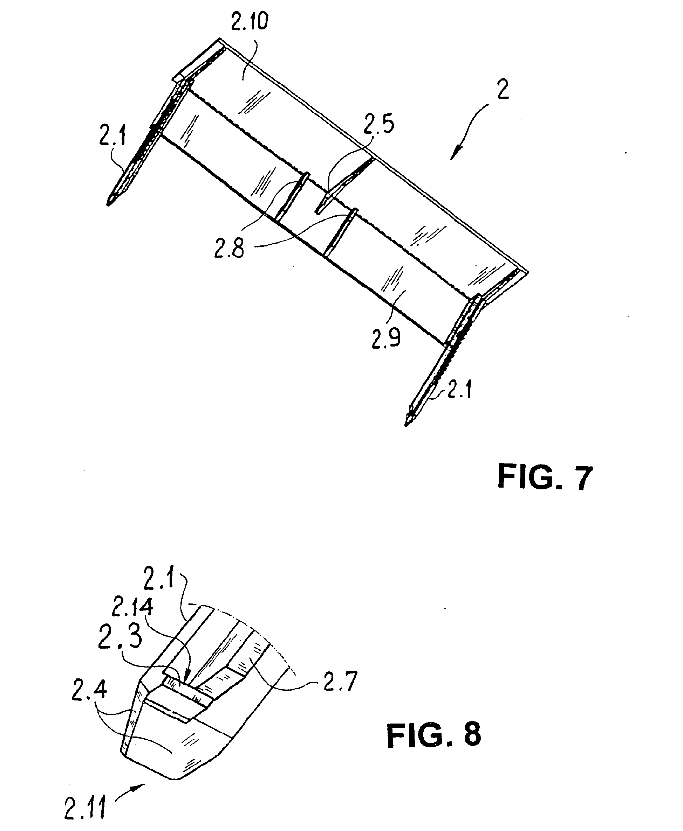

Andererseits ist das Rastelement 2.3 in Richtung freies Ende 2.11 abgeschrägt (vgl. Fig. 8) und dadurch das Einschieben des Führungsarms 2.1 erleichtert. Die Fig. 8 zeigt auch eine den Führungsarm 2.1 versteifende, längs des Führungsarms verlaufende Rippe 2.7, die ebenfalls in Richtung freies Ende 2.11 abgeschrägt ist. Der Führungsarm 2.1 läuft an seinem freien Ende 2.11 in weitere Abschrägungen 2.4 aus.

Die Lage der Führungsarme 2.1 gegenüber dem Adapter C ist stufenweise regulierbar. Zu dem Zweck weisen die Führungsarme 2.1 jeweils mehrere zahnleistenartig hintereinander aufgereihte, muldenförmige Rastelemente 2.2 (vgl. Figuren 6 und 12) auf, die zu einem im Führungskanal 7.1, 7.2 befindlichen, teilzylindrischen Rastelement 1.1 kompatibel sind.

### Bezugszeichenliste:

- 100: Niederspannungs-Sicherheitstrennschalter

- A: Schaltdeckel
- B: Mittelteil
- C: Adapter

- 1: Rippenkasten
- 1.1: Rastelement
- 1.2: Auflagefläche
- 1.3: Auflagefläche
- 1.4: Sitz
- 1.5: Auflagefläche
- 1.6: Blockierelement
- 1.7: Blockierelement
- 1.8: Blockierelement
- 1.9: Aussparung
- 1.10: Absenkung

- 1.12: Schenkel

- 1.14: Stirnwand
- 1.15: Abschrägung
- 1.16: Längskante

- 1.17: Seitenwand
- 1.18: Seitenwand
- 1.19: hintere Wand
- 1.20: Innenwand
- 1.21: Innenwand
- 1.22: Plättchen
- 1.23: Plättchen
- 1.24: Führungsrippe
- 1.25: Eingangslücke
- 1.26: Isolationswand

- 2: Schienenabschirmung
- 2.1: Führungsarm
- 2.2: Rastelement
- 2.3: Rastelement
- 2.4: Abschrägung
- 2.5: Versteifungsrippe
- 2.6: Versteifungsrippe
- 2.7: Rippe
- 2.8: Versteifungsrippe
- 2.9: Abdeckelement
- 2.10: Abdeckelement
- 2.11: freies Ende
- 2.12: Strichlinie
- 2.13: Längskante
- 2.14: Stützfläche

- 3: Handgriff
- 4: Scheibe
- 5: Schieber
- 6: Prüföffnung
- 7.1, 7.2: Führungskanal (v. 1)
- 8: Sammelschiene
- 9: Halterung

## Patentansprüche

1. Kompakter Niederspannungs-Sicherheitstrennschalter (100)zur Montage auf einem Sammelschienensystem, aufweisend:
- einen auf ein jeweiliges Sammelschienensystem aufzusetzenden Adapter (C),
- ein Mittelteil (B), das von dem Adapter (C) unterlegt ist,
- einen am Mittelteil (B) schwenkbar angeordneten Schaltdeckel (A),
- und eine Schienenabschirmung (2),
**dadurch gekennzeichnet, dass**
die Schienenabschirmung (2) durch Verschieben verstellbar am Adapter (C) oder am Mittelteil (B) angeordnet ist.

2. Sicherheitstrennschalter nach Anspruch 1, **dadurch gekennzeichnet, dass** die Schienenabschirmung (2) in den Adapter (C) oder in das Mittelteil (B) einschiebbar ist.

3. Sicherheitstrennschalter nach Anspruch 1, **dadurch gekennzeichnet, dass** die Schienenabschirmung (2) auf den Adapter (C) oder auf das Mittelteil (B) aufschiebbar ist.

4. Sicherheitstrennschalter nach einem der Ansprüche 1 bis 3, **dadurch gekennzeichnet, dass** die Schienenabschirmung (2) zwei zueinander senkrecht liegende, plattenförmige Abdeckelemente (2.9, 2.10) sowie zwei seitliche Führungsarme (2.1) aufweist.

5. Sicherheitstrennschalter nach Anspruch 4, **dadurch gekennzeichnet, dass** die Führungsarme (2.1) leistenförmig sind.

6. Sicherheitstrennschalter nach Anspruch 4, **dadurch gekennzeichnet, dass** die Führungsarme (2.1) in seitliche Führungskanäle (7.1, 7.2) des Rippenkastens (1) des Adapters (C) einrastend schiebbar ist.

7. Sicherheitstrennschalter nach Ansprüchen 4 bis 6, **dadurch gekennzeichnet, dass** die eingeschobenen Führungsarme (2.1) aus den Führungskanälen (7.1, 7.2) nicht entfernbar sind, indem der.Führungskanal oder der Führungsarm mit wenigstens einem Rastelement (2.3) versehen ist, das eine das Herausnehmen des Führungsarms aus dem Führungskanaln hindernden Stützfläche (2.14) aufweist, die gegen ein am Führungsarm oder im Führungskanal befindliches Blockierelement (1.7) drückt.

8. Sicherheitstrennschalter nach einem der vorhergehenden Ansprüche, **dadurch gekennzeichnet, dass** der Führungsarm (2.1) mit wenigstens einem ersten Rastelement (2.2) versehen ist, das mit wenigstens einem, im Führungskanal (7.1, 7.2) des Rippenkastens (1) angeordneten zweiten Rastelement (1.1) zusammenwirkt.

9. Sicherheitstrennschalter nach Anspruch 8, **dadurch gekennzeichnet, dass** die Rastelemente (2.2) des Führungsarmes (2.1) mehrere hintereinander aufgereihte, teilzylindrische Eintiefungen sind.

10. Sicherheitstrennschalter nach Anspruch 8 und 9, **dadurch gekennzeichnet, dass** das Rastelement (1.1) des Rippenkastens (1) ein teilzylindrischer, an die Eintiefung angepasster Vorsprung ist.

11. Sicherheitstrennschalter nach Anspruch 7, **dadurch gekennzeichnet, dass** im Führungskanal (7.1, 7.2) des Rippenkastens (1) eine die Lage des Führungsarms (2.1) stabilisierende Halterung (9) vorgesehen ist.

12. Sicherheitstrennschalter nach Anspruch 11, **dadurch gekennzeichnet, dass** die Halterung (9) Blockierelemente (1.6, 1.7, 1.8) aufweist, die mit dem eingeschobenen Führungsarm (2.1) in Kontakt stehen oder den Führungsarm (2.1) wenigstens teilweise umgreifen.

## Claims

1. Compact low-voltage safety breaker (100) for mounting on a busbar system, comprising:
- an adapter (C) to be positioned on a respective busbar system,
- a middle part (B) which has the adapter (C) lying under it,
- a switch cover (A) pivotably disposed on the middle part (B),
- and a bar shield (2),
**characterised in that**
the bar shield (2) is disposed on the adapter (C) or on the middle part (B) so as to be adjustable by displacement.

2. Safety breaker as claimed in claim 1, **characterised in that** the bar shield (2) can be pushed into the adapter (C) or into the middle part (B).

3. Safety breaker as claimed in claim 1, **characterised in that** the bar shield (2) can be pushed onto the adapter (C) or onto the middle part (B).

4. Safety breaker as claimed in any one of claims 1 to 3, **characterised in that** the bar shield (2) has two mutually perpendicular, plate-shaped cover elements (2.9, 2.10) and two lateral guide arms (2.1).

5. Safety breaker as claimed in claim 4, **characterised in that** the guide arms (2.1) are strip-like.

6. Safety breaker as claimed in claim 4, **characterised in that** the guide arms (2.1) can be pushed in a latching manner into lateral guide channels (7.1, 7.2) of the ribbed box (1) of the adapter (C).

7. Safety breaker as claimed in claims 4 to 6, **characterised in that** the pushed-in guide arms (2.1) cannot be removed from the guide channels (7.1, 7.2) **in that** the guide channel or the guide arm is provided with at least one latch element (2.3) which has a support surface (2.14) preventing the removal of the guide arm from the guide channel and which presses against a blocking element (1.7) located on the guide arm or in the guide channel.

8. Safety breaker as claimed in any one of the preceding claims, **characterised in that** the guide arm (2.1) is provided with at least one first latch element (2.2) which cooperates with at least one second latch element (1.1) disposed in the guide channel (7.1, 7.2) of the ribbed box (1).

9. Safety breaker as claimed in claim 8, **characterised in that** the latch elements (2.2) of the guide arm (2.1) are a plurality of partly cylindrical depressions lined up one after the other.

10. Safety breaker as claimed in claim 8 and 9, **characterised in that** the latch element (1.1) of the ribbed box (1) is a partly cylindrical protrusion adapted to the depression.

11. Safety breaker as claimed in claim 7, **characterised in that** in the guide channel (7.1, 7.2) of the ribbed box (1) a holder (9) stabilising the position of the guide arm (2.1) is provided.

12. Safety breaker as claimed in claim 11, **characterised in that** the holder (9) has blocking elements (1.6, 1.7, 1.8) which are in contact with a pushed-in guide arm (2.1) or engage at least partially around the guide arm (2.1).

## Revendications

1. Sectionneur de sécurité basse tension (100) compact destiné à être monté sur un système de barres de distribution et comprenant :
- un adaptateur (C) à placer sur le système de barres concerné,
- un élément intermédiaire (B) sous lequel est agencé l'adaptateur (C),
- un capot (A) agencé pivotant sur l'élément intermédiaire (B)
- et un cache de protection de barre (2),
**caractérisé en ce que** ledit cache de protection (2) est agencé réglable soit sur l'adaptateur (C), soit sur l' élément intermédiaire (B).

2. Sectionneur de sécurité selon la revendication 1, **caractérisé en ce que** le cache de protection (2) peut être inséré dans l'adaptateur (C) ou dans l'élément intermédiaire (B).

3. Sectionneur de sécurité selon la revendication 1, **caractérisé en ce que** le cache de protection (2) peut être monté coulissant sur l'adaptateur (C) ou sur l'élément intermédiaire (B).

4. Sectionneur de sécurité selon l'une quelconque des revendications 1 à 3, **caractérisé en ce que** le cache de protection (2) comprend, d'une part, deux éléments de recouvrement (2.9, 2.10) en forme de plaque, agencés perpendiculairement l'un par rapport à l'autre et, d'autre part, deux bras de guidage (2.1) latéraux.

5. Sectionneur de sécurité selon la revendication 4, **caractérisé en ce que** les bras de guidage (2.1) sont en forme de latte.

6. Sectionneur de sécurité selon la revendication 4, **caractérisé en ce que** les bras de guidage (2.1) peuvent être insérés coulissants et encliquetables dans des conduits latéraux (7.1, 7.2) présents dans le boîtier nervuré (1) de l'adaptateur (C).

7. Sectionneur de sécurité selon l'une quelconque des revendications 4 à 6, **caractérisé en ce que** les bras de guidage (2.1) insérés dans les conduits latéraux (7.1, 7.2) ne peuvent en être retirés du fait de la présence, sur le conduit ou sur le bras de guidage, d'au moins un élément d'arrêt (2.3) comprenant une surface d'appui (2.14) qui, en poussant contre une butée (1.7) agencée sur le bras de guidage ou sur le conduit, empêche le retrait du bras de guidage du conduit.

8. Sectionneur de sécurité selon l'une quelconque des revendications précédentes, **caractérisé en ce que** le bras de guidage (2.1) est doté d'au moins un premier élément d'arrêt (2.2) qui coopère avec au moins un second élément d'arrêt (1.1) agencé dans le conduit (7.1, 7.2) du boîtier nervuré (1).

9. Sectionneur de sécurité selon la revendication 8, **caractérisé en ce que** les éléments d'arrêt (2.2) du bras de guidage (2.1) sont une pluralité de creux partiellement cylindriques alignés les uns derrière les autres.

10. Sectionneur de sécurité selon les revendications 8 et 9, **caractérisé en ce que** l'élément d'arrêt (1.1) du boîtier nervuré (1) est un taquet partiellement cylindrique adapté au creux.

11. Sectionneur de sécurité selon la revendication 7, **caractérisé par** la présence, dans le conduit (7.1, 7.2) du boîtier nervuré (1), d'un dispositif de support (9) prévu pour stabiliser la position du bras de guidage (2.1).

12. Sectionneur de sécurité selon la revendication 11, **caractérisé en ce que** le support (9) comprend des éléments de blocage (1.6, 1.7, 1.8) qui sont en contact avec le bras de guidage (2.1) inséré ou qui enveloppent ce dernier au moins pour partie.
